# EUROPEAN PATENT APPLICATION

(11) **EP 4 230 716 A1**
(43) Date of publication of application: **23.08.2023**
(21) Application number: 21880094.4
(22) Date of filing: 12.10.2021
(51) Int. Cl.: C12G 3/04, C12G 3/06

(54) **ALCOHOLIC BEVERAGE CONTAINING LIMONENE, PRODUCTION METHOD THEREFOR, AND METHOD FOR IMPROVING BITTERNESS OF ALCOHOLIC BEVERAGE CONTAINING LIMONENE**

(30) Priority: 14.10.2020 JP 2020173476
(71) Applicant: Suntory Holdings Limited, Osaka 530-8203 (JP)
(72) Inventor: YOSHII, Takaaki, Soraku-gun, Kyoto 619-0284 (JP); HATA, Yuto, Soraku-gun, Kyoto 619-0284 (JP); NAKAHARA, Koichi, Soraku-gun, Kyoto 619-0284 (JP)
(74) Representative: Vossius & Partner Patentanwälte Rechtsanwälte mbB
(86) International application number: PCT/JP2021/037684
(87) International publication number: WO 2022/080355

(57) **Abstract**

The present invention aims to provide a limonene-containing alcoholic beverage whose limonene- and alcohol-induced bitterness is masked, a method of producing the same, a method of reducing limonene- and alcohol-induced bitterness of a limonene-containing alcoholic beverage, and use of ethyl glycoside for reducing limonene- and alcohol-induced bitterness of a limonene-containing alcoholic beverage. The present invention relates to an alcoholic beverage containing 0.5 to 50 mg/L limonene and 5 to 5000 mg/L ethyl glycoside.

## Description

### TECHNICAL FIELD

The present invention relates to a limonene-containing alcoholic beverage, a method of producing the same, a method of reducing the bitterness of a limonene-containing alcoholic beverage, and use of ethyl glycoside in a limonene-containing alcoholic beverage.

### BACKGROUND ART

Many people like beverages having a citrus fruit aroma and flavor because such beverages can give a refreshing feeling resulting from a combination of moderate sweetness and acidity and a refreshing aroma distinctive to citrus fruits. At the same time, some people dislike the peculiar bitterness of citrus fruits.

Some methods have been reported which reduce the bitterness derived from citrus fruits in food and beverages having a citrus fruit aroma and flavor. For example, according to Patent Literature 1, an extract of a plant belonging to the genus *Psophocarpus* of the family Fabaceae is added to a food and beverage containing a citrus component that is at least one of citrus fruit juice or citrus pulp, whereby the peculiar bitterness and strong acidity of citrus fruits are suppressed. Patent Literature 2 discloses a method of solubilizing and removing a bitter substance, i.e., naringin, of citrus fruits from citrus food ingredients. Patent Literature 3 discloses a novel beverage whose bitterness is masked. The beverage is particularly an alcohol-containing alcoholic beverage among food and beverages having a citrus fruit aroma and flavor.

### CITATION LIST

### - Patent Literature

Patent Literature 1: JP 2010-57428 A
Patent Literature 2: JP 2010-119344 A
Patent Literature 3: JP 2019-97428 A

### SUMMARY OF INVENTION

### - Technical Problem

Addition of a specific component to a food and beverage and removal of a bitterness component from a food and beverage in the methods of reducing the bitterness disclosed in Patent Literature 1 and Patent Literature 2 described above affect the taste of the food and beverage. Thus, it is difficult to remove the bitterness while maintaining the palatability of the food and beverage itself and citrus fruit characteristics. In particular, an alcohol-containing alcoholic beverage among food and beverages having a citrus fruit aroma and flavor tends to have a stronger bitterness. Patent Literature 3 described above discloses an alcoholic beverage having a citrus fruit aroma and flavor, wherein the bitterness is masked. As described above, studies have been made on a technique for such food and beverages to mask the bitterness and maintain citrus fruit characteristics at the same time. In particular, studies have been made on a technique to mask or suppress the bitterness induced by alcohol and limonene which is one of components contained in citrus fruits.

The present invention aims to provide a limonene-containing alcoholic beverage whose limonene- and alcohol-induced bitterness is masked, a method of producing the same, a method of reducing limonene- and alcohol-induced bitterness of a limonene-containing alcoholic beverage, and use of ethyl glycoside for reducing limonene- and alcohol-induced bitterness of a limonene-containing alcoholic beverage.

### - Solution to Problem

As a result of extensive studies to solve the above issues, the present inventors found that when a limonene-containing alcoholic beverage contains ethyl glycoside at a specific range of concentration, the bitterness derived from the co-presence of limonene and alcohol can be masked.

Specifically, the present invention relates to the following beverages and the like.
(1) An alcoholic beverage containing: 0.5 to 50 mg/L limonene; and 5 to 5000 mg/L ethyl glycoside.
(2) The alcoholic beverage according to (1) above, wherein the alcoholic beverage has an alcohol content of 1 to 10 v/v%.
(3) A method of producing an alcoholic beverage, the method including: adjusting a limonene content to 0.5 to 50 mg/L; and adjusting an ethyl glycoside content to 5 to 5000 mg/L.
(4) The method of producing the alcoholic beverage according to (3) above, wherein the alcoholic beverage has an alcohol content of 1 to 10 v/v%.
(5) A method of reducing limonene- and alcohol-induced bitterness of an alcoholic beverage having a limonene content of 0.5 to 50 mg/L, the method including: adjusting an ethyl glycoside content of the alcoholic beverage to 5 to 5000 mg/L.
(6) The method of reducing bitterness of an alcoholic beverage according to (5) above, wherein the alcoholic beverage has an alcohol content of 1 to 10 v/v%.
(7) Use of ethyl glycoside for reducing limonene- and alcohol-induced bitterness of an alcoholic beverage having a limonene content of 0.5 to 50 mg/L, wherein ethyl glycoside is added such that the alcoholic beverage has an ethyl glycoside content of 5 to 5000 mg/L.
(8) The use according to (7) above, wherein the alcoholic beverage has an alcohol content of 1 to 10 v/v%.

### - Advantageous Effects of Invention

The present invention can provide a limonene-containing alcoholic beverage whose limonene- and alcohol-induced bitterness is masked, a method of producing the same, and a method of reducing limonene- and alcohol-induced bitterness of a limonene-containing alcoholic beverage. The present invention can suppress the limonene- and alcohol-induced bitterness and thus can provide a beverage in which the palatability of the beverage itself is maintained. The present invention can also provide use of ethyl glycoside for reducing limonene- and alcohol-induced bitterness of a limonene-containing alcoholic beverage.

### DESCRIPTION OF EMBODIMENTS

The present invention relates to an alcoholic beverage containing 0.5 to 50 mg/L limonene and 5 to 5000 mg/L ethyl glycoside. In the alcoholic beverage of the present invention, the limonene- and alcohol-induced bitterness is masked by ethyl glycoside.

The present invention also provides a method of producing an alcoholic beverage, the method including adjusting the limonene content to 0.5 to 50 mg/L and the ethyl glycoside content to 5 to 5000 mg/L. It is a method of producing a limonene-containing alcoholic beverage having a specific limonene concentration, wherein the limonene- and alcohol-induced bitterness is masked by adjusting the ethyl glycoside content to 5 to 5000 mg/L.

The present invention also provides a method of reducing limonene- and alcohol-induced bitterness of an alcoholic beverage having a limonene content of 0.5 to 50 mg/L, the method including adjusting the ethyl glycoside content of the alcoholic beverage to 5 to 5000 mg/L. It is a method of masking the limonene- and alcohol-induced bitterness of the limonene-containing alcoholic beverage having a specific limonene concentration by adjusting the ethyl glycoside content to 5 to 5000 mg/L.

The present invention also relates to use of ethyl glycoside for reducing limonene- and alcohol-induced bitterness of an alcoholic beverage having a limonene content of 0.5 to 50 mg/L, wherein ethyl glycoside is added such that the alcoholic beverage has an ethyl glycoside content of 5 to 5000 mg/L. Use of ethyl glycoside in a limonene-containing alcoholic beverage having a specific limonene concentration such that the alcoholic beverage has an ethyl glycoside content of 5 to 5000 mg/L can mask the limonene- and alcohol-induced bitterness of the alcoholic beverage.

Herein, the expression "X to Y" means X or more and Y or less.

### <Limonene>

The alcoholic beverage of the present invention contains limonene. Herein, the term "limonene" refers to d-limonene. Limonene is a monoterpene hydrocarbon compound. It is a component having a sweet and acidic aroma and freshness suggestive of citrus fruits. Limonene is often contained in a flavor having citrus aroma and flavor. Limonene in the alcoholic beverage of the present invention may be one derived from citrus fruits or citrus fruit juices; one derived from other additives (e.g., one derived from a fruit other than citrus fruits or one derived from food); a flavoring or masking agents; or an artificially synthesized product.

The alcoholic beverage of the present invention has a limonene content of 0.5 to 50 mg/L. The limonene content is preferably 0.5 to 30 mg/L, more preferably 0.5 to 15 mg/L, still more preferably 1 mg/L to 13 mg/L, most preferably 2 mg/L to 10 mg/L. When the limonene content is less than 0.5 mg/L, the bitterness is only slightly tasted, and the bitterness masking effect of the present invention on the limonene- and alcohol-induced bitterness is only slightly felt. Meanwhile, when the limonene content is more than 50 mg/L, the aroma and flavor of limonene itself are too strong, impairing the palatability of the alcoholic beverage.

The alcoholic beverage of the present invention contains limonene in an amount of 0.5 mg/L or more, preferably 1 mg/L or more, more preferably 2 mg/L or more. At the same time, the alcoholic beverage of the present invention contains limonene in an amount of 50 mg/L or less, preferably 30 mg/L or less, more preferably 15 mg/L or less, still more preferably 13 mg/L or less, most preferably 10 mg/L or less.

In the present invention, the term "limonene content" of the alcoholic beverage refers to the limonene content of a beverage product prior to the best-before date. The limonene content gradually decreases over time due to oxidation and the like. Thus, presumably, the limonene content is significantly low in an alcoholic beverage that was produced a very long time ago, compared to the limonene content immediately after production. In the present invention, an alcoholic beverage product prior to the best-before date in which the measured limonene content is within the range defined in the present invention is recognized as the alcoholic beverage of the present invention. The term "best-before date" refers to the date until which beverage manufacturers can ensure the quality of the aroma and flavor, packaging container, and the like by means of formulation of the alcoholic beverage, production conditions at a filling plant, distribution conditions, and the like. Usually, the best-before date is printed on the outside of a packaging container. Herein, in the case of a product in a packaging container with a best-before date, the term "best-before date" in the context of "the content prior to the best-before date" refers to the best-before date printed on the container; whereas in the case of a product without a best-before date printed thereon, a period of 12 months from the production is regarded as the period until the best-before date. The 12-month period is often applied to common beverage products that do not require controlled-temperature delivery.

### (Measurement of limonene content)

The limonene content of the alcoholic beverage can be measured by gas chromatography under the following conditions.
Instrument GC 6890N (Agilent Technologies)
Column: HP-ULTRA2 (J&W); inner diameter: 0.32 mm; length: 50 m; film thickness: 0.52 µm
Carrier gas: He
Flow: 2.2 mL/min
Inlet Splitless
Inlet temp.: 250°C
Oven temp.: 45°C (1 min) → 5°C/min → 230°C (2 min)
Detector: FID
Det.temp.: 260°C
Injection volume: 2.0 microliters

### <Citrus beverage>

In the present invention, the alcoholic beverage is not limited as long as it has a limonene content of 0.5 to 50 mg/L, but it is preferably a citrus beverage. The "citrus" beverage means a beverage having a citrus fruit aroma and flavor. It is a beverage having an aroma and flavor that suggest citrus fruits when consumed. Examples of the citrus fruits include oranges such as valencia orange and navel orange; grapefruits such as grapefruit; flavorful acid citrus fruits such as lemon, lime, shikuwasa, daidai, yuzu, kabosu, sudachi, citron, and Buddha's hand; miscellaneous citrus fruits such as *Citrus natsudaidai,* Hassaku orange, *Citrus tamurana,* oroblanco, and Dekopon; pomelos such as iyokan and tankan; mandarins such as mandarin orange, unshu mikan, Ponkan, and Kishu mikan; kumquats such as kumquat.

Examples of the alcoholic beverage having a citrus fruit aroma and flavor include alcoholic beverages containing a citrus fruit juice and alcoholic beverages containing a part of a citrus fruit itself. The alcoholic beverage may be free of fruit juice as long as the beverage has a citrus fruit aroma and flavor. Such a beverage may be, for example, an alcoholic beverage containing an extract containing an aroma component extracted from a citrus fruit or an alcoholic beverage containing a flavor obtained by artificially reproducing an aroma component characteristic of a citrus fruit.

### <Ethyl glycoside>

Ethyl glycoside is a type of sugar in which an ethanol molecule is bound to a glucose molecule. It is a known substance produced in the production process of brewed liquor and present in a trace amount in brewed liquor. When maltose (in which two glucose molecules are linked together) is decomposed by an enzyme called glucosidase, the enzyme causes a surrounding ethanol molecule to combine with a glucose molecule, whereby an ethyl glycoside molecule and a glucose molecule are produced. The ethyl glycoside for use in the present invention may be ethyl glycoside produced by a known method. Commercially available ethyl glycoside can be used. In the present invention, the ethyl glycoside is preferably ethyl glucoside.

According to the present invention, ethyl glycoside is contained at a specific concentration to a limonene-containing alcoholic beverage having a specific limonene concentration, whereby the limonene- and alcohol-induced bitterness can be effectively masked, and the palatability of the alcoholic beverage itself can be maintained.

Ethyl glycoside for use in the present invention may be α- or β-ethyl glycoside, preferably α-ethyl glycoside. Ethyl-α-glycoside has a history of consumption. It is a component considered to be safe based on the history and thus can be suitably used. Ethyl glycoside for use in the present invention is more preferably ethyl-α-glucoside.

Techniques to improve aromas and flavors by adding ethyl glycoside have been reported. For example, according to JP H07-250644, adding ethyl glucoside to various food and beverages can effectively remove the bitterness, astringent taste, and other unpleasant odors and enhance or improve a desirable aroma and flavor inherent to the food and beverages. However, while the literature describes that adding ethyl glycoside can improve the aroma and flavor by removing the bitterness of potassium chloride and thus can provide a highly palatable salty taste, the literature nowhere discloses or suggests whether ethyl glycoside can effectively mask the limonene- or citrus fruit-derived bitterness, particularly in alcohol-containing beverages.

Examples of bitterness substances mainly include alkaloids such as caffeine, theobromine, and nicotine, catechins, terpenoids such as humulones, limonene, and cucurbitacin, naringin (flavanone glycoside), bitter amino acids, bitter peptides, bile acids, and inorganic salts such as calcium salts and magnesium salts. Whether a substance having an effect of suppressing the bitterness of inorganic salts such as calcium salt and magnesium salt has the same effect on the bitterness of limonene is not obvious even to a person skilled in the art. In other words, the present invention is based on the idea completely different from that of the invention disclosed in the above literature (JP H07-250644 A) and is not an invention that can be easily achieved from the known inventions.

The alcoholic beverage of the present invention has an ethyl glycoside content of 5 to 5000 mg/L. When the ethyl glycoside content of the alcoholic beverage of the present invention is 5 mg/L or more, the limonene- and alcohol-induced bitterness can be reduced. Thus, the present invention can provide a limonene-containing alcohol beverage in which the palatability of the alcoholic beverage itself is maintained. The ethyl glycoside content of the alcoholic beverage of the present invention is preferably 10 to 5000 mg/L, more preferably 50 to 5000 mg/L, still more preferably 100 to 5000 mg/L. The ethyl glycoside content of the alcoholic beverage can be measured by a known method using high-performance liquid chromatography (HPLC).

Herein, the ethyl glycoside content of the alcoholic beverage refers to the ethyl glycoside content of an alcoholic beverage product prior to the best-before date.

### (Measurement of ethyl glycoside content)

The ethyl glycoside content of the alcoholic beverage can be measured using high-performance liquid chromatography (HPLC) under the following conditions.
High-performance liquid chromatography: LC-2030C (Shimadzu Corporation)
Corona detector: CORONA Ultra (Thermo Fisher Scientific K.K. )
Column: Cosmosil Hilic (Nacalai Tesque, Inc.; inner diameter: 4.6 mm; length: 150 mm)
Mobile phase (A): Water
Mobile phase (B): Acetonitrile
Flow rate: 0.5 mL/min
Bconc.: 80%
Oven temperature: 40°C

### <Alcohol>

The beverage of the present invention is an alcohol-containing alcoholic beverage. Herein, the alcoholic beverage is preferably a beverage containing 1 v/v% or more alcohol. The term "alcohol" means ethanol. A limonene-containing beverage, which also contains alcohol, has a strong limonene- and alcohol-induced bitterness, so that it has been desired to suppress the limonene- and alcohol-induced bitterness of a limonene-containing alcoholic beverage.

In the alcoholic beverage of the present invention, the alcohol content is preferably 1 to 10 v/v%, more preferably more than 1 v/v% and 10 v/v% or less, still more preferably 3 to 10 v/v%, yet still more preferably 3 to 9 v/v%, most preferably 4 to 9 v/v%. These ranges are given because when the alcoholic beverage has an alcohol content of 1 v/v% or more, the bitterness is intensified due to the co-presence of alcohol and limonene. It is also because when the alcoholic beverage has an alcohol content of more than 10 v/v%, the alcohol-induced bitterness is intensified so that a larger amount of ethyl glycoside is required to mask the alcohol-induced bitterness, making it difficult to mask the bitterness while maintaining the palatability of the beverage.

When the alcoholic beverage of the present invention is a low alcoholic beverage having an alcohol content of 1 v/v% or less, preferably, the alcoholic beverage has a limonene content of 10 to 50 mg/L and an ethyl glycoside content of 5 to 5000 mg/L. When the alcoholic beverage has a low alcohol content, the limonene- and alcohol-induced bitterness tends to be weak. Thus, preferably, a low alcoholic beverage having an alcohol content of 1 v/v% or less has a limonene content of 10 mg/L or more for effectively benefiting from the effect of the present invention.

The raw material of alcohol for use in the alcoholic beverage of the present invention is not limited as long as it is an alcohol-containing liquid suitable for drinking and can be obtained by, for example, alcohol fermentation of sugar by yeast. The raw material for alcohol fermentation is also not limited. Examples include fruits such as grape, apple, cherry and coconut, grains such as rice, barley and corn, root vegetables such as potato and sweet potato, and sugarcane.

Examples of alcohol materials include brewed liquor, distilled liquor, and mixed liquor obtained by mixing different kinds of distilled liquor. Examples of the brewed liquor include sake, wine, and beer. Examples of the distilled liquor include spirits (e.g., spirits such as gin, vodka, and tequila, alcohols as a starting material, and neutral alcohol) and liqueurs. Any of these can be used alone or in combination of two or more thereof.

When brewed liquor is used as an alcohol material of the alcoholic beverage of the present invention, it suffices as long as the total ethyl glycoside content of the beverage including the ethyl glycoside of the brewed liquor is 5 to 5000 mg/L.

### (Measurement of alcohol content)

The alcohol content of alcoholic beverage of the present invention can be measured by a vibrating density meter. Specifically, an alcoholic beverage is filtered or sonicated to prepare a sample from which carbon dioxide has been removed. The sample is distilled over open fire to obtain a distillate. The density of the distillate at 15°C is measured. The density is then converted to the alcohol content using an appendix "Table 2: Table of Conversion between Alcohol Content and Density (15°C) or Specific Gravity (15/15°C)" of the Official Analysis Method of National Tax Agency of Japan (National Tax Agency Directive No. 6 in 2007, revised on June 22, 2007).

### <pH>

As described above, the alcoholic beverage of the present invention contains ethyl glycoside in a specific range of amount, thus producing an effect of masking the limonene- and alcohol-induced bitterness generated by the co-presence of limonene and alcohol. As a result of further studies in terms of palatability of the beverage itself, the present inventors found that when the pH of an alcoholic beverage containing limonene and ethyl glycoside is adjusted to the range of 2.3 to 4.5, a certain or higher level of palatability of the alcoholic beverage itself can be achieved. Thus, in the alcoholic beverage of the present invention, the pH is preferably in the range of 2.3 to 4.5. When the pH is less than 2.3, the sweetness distinctive to ethyl glycoside may be too notable and may affect the taste of the alcoholic beverage itself. When the pH is more than 4.5, the alcoholic beverage may taste slightly harsh. The pH is more preferably in the range of 2.8 to 4.1, still more preferably in the range of 3.3 to 4.1. When the pH is in the rage of 3.3 to 4.1, the alcoholic beverage tastes the best while the bitterness masking effect is exerted.

When the pH of the alcoholic beverage is adjusted, the pH adjustment method is not limited. The pH can be adjusted by using an agent commonly used for pH adjustment of alcoholic beverages, such as citric acid and trisodium citrate. Further, the pH can also be adjusted by adjusting the amounts of other components (e.g., fruit juices). The pH of the alcoholic beverage can be measured using a typical pH meter. In measurement of the pH of the alcoholic beverage, when the alcoholic beverage contains carbonic acid, the alcoholic beverage is degassed before the measurement. The degassing method is not limited. The pH is measured after carbonic acid is completely degassed by a common method such as ultrasound treatment, aeration treatment, or reduced pressure degassing treatment.

### <Other components and the like>

The alcoholic beverage of the present invention may contain various components typically added to beverages, as long as the nature of the present invention is not adversely affected. Examples include sugars, acids, flavors, vitamins, pigments, antioxidants, sweeteners, acidulants, emulsifiers, preservatives, seasonings, extracts, pH adjusters, and quality stabilizers.

The alcoholic beverage of the present invention may be a carbonated beverage containing a carbon dioxide gas or a non-carbonated beverage but is preferably a carbonated beverage. Adding a carbon dioxide gas can enhance the refreshing feeling given by the beverage and can further reduce the limonene- and alcohol-induced bitterness. A carbon dioxide gas can be added to the beverage by a method typically known to a person skilled in the art. Nonlimiting examples of the method may include a method in which carbon dioxide is dissolved in the beverage under pressure; a method in which carbon dioxide and the beverage are mixed in a pipe using a mixer such as a carbonator of Tuchenhagen GmbH; a method in which the beverage is sprayed into a tank filled up with carbon dioxide and is thus allowed to absorb the carbon dioxide; or a method in which the beverage and carbonated water are mixed. The carbon dioxide gas pressure is adjusted suitably using any of these means.

The gas pressure at which a carbon dioxide gas is added to the alcoholic beverage of the present invention is not limited. At a liquid temperature of the beverage of 20°C, for example, the gas pressure is 0.8 kgf/cm² or more, preferably in the range of 0.8 to 3.1 kgf/cm². The beverage of the present invention containing a carbon dioxide gas include chuhai. The carbon dioxide gas pressure can be measured by a method known to a person skilled in the art. For example, a gas volume meter GVA-500A available from Kyoto Electronics Manufacturing Co., Ltd. can be used for measurement. More specifically, the liquid temperature of the beverage is set to 20°C, and the gas inside a container is released (snifted) in the gas volume meter, and the container is resealed, followed by shaking. Then, the carbon dioxide gas pressure of the beverage is measured. Herein, the carbon dioxide gas pressure refers to the carbon dioxide gas pressure at a liquid temperature of the beverage of 20°C, unless otherwise stated.

The alcoholic beverage of the present invention can be packaged in a container. The form of the container is not limited. The alcoholic beverage can be packaged in a typical container such as a glass bottle, a molded container mainly made of plastic, a metal can, or a laminated paper container laminated with metal foil or plastic film(s).

### <Method of producing alcoholic beverage>

The method of producing an alcoholic beverage of the present invention includes adjusting the limonene content to 0.5 to 50 mg/L and adjusting the ethyl glycoside content to 5 to 5000 mg/L.

In the present invention, limonene and ethyl glycoside are simply added in the production of an alcoholic beverage such that the resulting alcoholic beverage has a limonene content and an ethyl glycoside content in the above ranges. The method and order of adding limonene to the alcoholic beverage are not limited. The method and order of adding ethyl glycoside are not limited. Adjusting the limonene content of the beverage to 0.5 to 50 mg/L may be performed simultaneously with or separately from adjusting the ethyl glycoside content of the beverage to 5 to 5000 mg/L. Either one of these steps may be performed earlier or later.

In the method of producing an alcoholic beverage of the present invention, preferably, the alcoholic beverage has an alcohol content of 1 to 10 v/v%. The production method of the present invention is suitable as a method of producing an alcoholic beverage having an alcohol content of 1 to 10 v/v%. The method of producing an alcoholic beverage of the present invention may include adjusting the alcohol content of the beverage. Adjusting the alcohol content can be performed simultaneously with or separately from adjusting the limonene content and/or adjusting the ethyl glycoside content. Any one of these steps may be performed earlier or later.

The limonene, ethyl glycoside, alcohol, their amounts in the alcoholic beverage, and preferred embodiments, as well as the pH of the alcoholic beverage, carbon dioxide gas, and the like in the method of producing an alcoholic beverage of the present invention are the same as those of the alcoholic beverage of the present invention.

### <Method of reducing bitterness of alcoholic beverage>

The method of reducing bitterness of an alcoholic beverage of the present invention is a method of reducing limonene- and alcohol-induced bitterness of an alcoholic beverage having a limonene content of 0.5 to 50 mg/L, the method including adjusting an ethyl glycoside content of the alcoholic beverage to 5 to 5000 mg/L.

An alcoholic beverage having a limonene content in the above range has alcohol- and limonene-induced bitterness, but the alcohol- and limonene-induced bitterness can be sufficiently reduced by adjusting the ethyl glycoside content of the alcoholic beverage to the above range.

Preferably, the alcoholic beverage has an alcohol content of 1 to 10 v/v%.

The limonene, ethyl glycoside, alcohol, their amounts in the alcoholic beverage, and preferred embodiments, as well as the pH of the alcoholic beverage, carbon dioxide gas, and the like in the method of reducing bitterness of an alcoholic beverage of the present invention are the same as those of the alcoholic beverage of the present invention.

### <Use of ethyl glycoside for reducing limonene- and alcohol-induced bitterness of alcoholic beverage>

The present invention also encompasses use of ethyl glycoside for reducing limonene- and alcohol-induced bitterness of an alcoholic beverage having a limonene content of 0.5 to 50 mg/L.

In the use of ethyl glycoside of the present invention for reducing limonene- and alcohol-induced bitterness of an alcoholic beverage having a limonene content of 0.5 to 50 mg/L, ethyl glycoside is added such that the alcoholic beverage has an ethyl glycoside content of 5 to 5000 mg/L. Ethyl glycoside is used in a limonene-containing alcoholic beverage having a limonene concentration in the above range such that the alcoholic beverage has an ethyl glycoside content of 5 to 5000 mg/L, whereby the limonene- and alcohol-induced bitterness of the alcoholic beverage can be masked.

Preferably, the alcoholic beverage has an alcohol content of 1 to 10 v/v%.

The limonene, ethyl glycoside, alcohol, their amounts in the alcoholic beverage, and preferred embodiments, as well as the pH of the alcoholic beverage, carbon dioxide gas, and the like in the use of ethyl glycoside of the present invention for reducing limonene- and alcohol-induced bitterness of an alcoholic beverage are the same as those of the alcoholic beverage of the present invention.

### EXAMPLES

Hereinafter, examples that more specifically describe the present invention are described. The present invention is not limited to these examples.

Ethyl glycoside used in the examples was α-ethyl glycoside (ethyl-α-D-glucoside (hereinafter described as EG)).

### (Reference Examples 1 to 3) Confirmation of expression of limonene-induced bitterness and expression of limonene- and alcohol-induced bitterness

Limonene (D-limonene available from NACALAI TESQUE, INC.) was dissolved in pure water such that the limonene content was as described in Table 1. Thus, samples were prepared. In addition, alcohol and limonene were dissolved in pure water to obtain an alcohol content and a limonene content as described in Table 1 to prepare samples. A sensory test by spitting was performed to evaluate the bitterness intensity of the samples by two expert panelists based on the following criteria. For evaluation based on the sensory test (hereinafter referred to as the sensory evaluation), each panelist tasted a sample (10 mL) in the mouth for five seconds, spit out the sample, and evaluated the bitterness intensity (bitterness lingering in the mouth after spitting). When evaluating a different sample, each expert panelist rinsed the mouth with water until the taste in the mouth disappeared. For the sensory evaluation, the expert panelists exchanged views in advance to achieve a mutual understanding on the bitterness intensity. Then, the panelists confirmed the following criteria: 1 point for pure water (limonene free); and 7 points for a solution containing 100 mg/L limonene dissolved in 10 v/v% alcoholic water. The panelists scored the bitterness based on the criteria. Specifically, the bitterness intensity was evaluated at 13 levels with 0.5-point increments based on the following criteria (1 to 7 points). Subsequently, the panelists averaged the scores. Table 1 shows the results (average (points) of the bitterness intensity).

### <Sensory test criteria>

No bitterness is tasted: 1 point (same as pure water or less bitterness)
Bitterness is very slightly tasted: 2 points (the same bitterness as that of a solution containing 10 mg/L limonene dissolved in 1 v/v% alcoholic water)
Bitterness is slightly tasted: 3 points (the same bitterness as that of a solution containing 30 mg/L limonene dissolved in 1 v/v% alcoholic water)
Bitterness is moderately tasted: 4 points (the same bitterness as that of a solution containing 50 mg/L limonene dissolved in 1 v/v% alcoholic water)
Bitterness is strongly tasted: 5 points (the same bitterness as that of a solution containing 100 mg/L limonene dissolved in 1 v/v% alcoholic water)
Bitterness is very strongly tasted: 6 points (the same bitterness as that of a solution containing 30 mg/L limonene dissolved in 10 v/v% alcoholic water)
Bitterness is very strongly tasted to a point where the beverage is not suitable for drinking: 7 points (the same bitterness as that of a solution containing 50 mg/L limonene dissolved in 10 v/v% alcoholic water)

**[Table 1]**

| Formulation components | | Limonene [mg/L] | | | | | |
|---|---|---|---|---|---|---|---|
| | | 0 | 0.5 | 10 | 30 | 50 | 100 |
| Reference Example 1 | Limonene alone | 1 | 1 | 1 | 2 | 3 | 4 |
| Reference Example 2 | Limonene and 1% alcohol | 1 | 2 | 2 | 3 | 4 | 5 |
| Reference Example 3 | Limonene and 10% alcohol | 4 | 4 | 5 | 6 | 7 | 7 |

The results in Table 1 show that the presence of limonene in the beverage produces bitterness. The results also show that the co-presence of limonene and alcohol intensify the bitterness. An increase in the limonene content or an increase in the alcohol content tended to intensify the bitterness. Citrus alcoholic beverages often contain limonene. The results in Table 1 confirmed that one of bitterness factors of the citrus alcoholic beverages is the expression of bitterness due to the co-presence of limonene and alcohol.

### (Example 1: alcohol content 1 v/v%; Example 2: alcohol content 10 v/v%) Bitterness masking effect of ethyl glycoside on alcoholic beverage

Pure water was added to neutral alcohol to prepare a mixture having an alcohol content of 1 v/v% (Tables 2 to 4) or 10 v/v% (Tables 5 to 7). Limonene (D-limonene available from NACALAI TESQUE, INC.) was dissolved in the mixture to obtain a limonene content as described in the following Tables 2 to 7. Further, ethyl glycoside (a-ethyl glycoside (FUJIFILM Wako Pure Chemical Corporation)) was dissolved therein to obtain an ethyl glycoside content as described in the following Tables 2 to 7. Thus, samples were prepared. A sensory test by spitting was performed by two expert panelists to evaluate (sensory evaluation) the bitterness masking effect on the obtained samples based on the following criteria. The sensory evaluation method by spitting is the same as described above for Reference Examples 1 to 3. For the sensory evaluation of the bitterness masking effect, the expert panelists exchanged views in advance to achieve a mutual understanding on the bitterness intensity. Then, the panelists confirmed the following criteria: 1 point when no bitterness is tasted (same as pure water or less bitterness); 7 points when the bitterness is the same as that of a solution containing 50 mg/L limonene dissolved in 10 v/v% alcoholic water; and the samples with three points or less are considered to be acceptable as products. The panelists scored the samples based on the criteria. Specifically, the bitterness masking effect was evaluated at 13 levels with 0.5-point increments based on the following criteria (1 to 7 points). Subsequently, the panelists averaged the scores. Tables 2 to 7 show the results. The alcohol content of the samples described in the following Tables 2 to 4 is 1 v/v% (Example 1). The alcohol content of the samples described in Tables 5 to 7 is 10 v/v% (Example 2). Table 4 shows averages of sensory evaluation results (scores of bitterness intensity) of panelists 1 and 2 shown in Tables 2 and 3. Table 7 shows averages of sensory evaluation results (scores of bitterness intensity) of the panelists 1 and 2 shown in Tables 5 and 6.

### <Sensory test criteria>

No bitterness is tasted: 1 point (same as pure water or less bitterness)
Bitterness is very slightly tasted: 2 points (the same bitterness as that of a solution containing 10 mg/L limonene dissolved in 1 v/v% alcoholic water)
Bitterness is slightly tasted: 3 points (the same bitterness as that of a solution containing 30 mg/L limonene dissolved in 1 v/v% alcoholic water)
Bitterness is moderately tasted: 4 points (the same bitterness as that of a solution containing 50 mg/L limonene dissolved in 1 v/v% alcoholic water)
Bitterness is strongly tasted: 5 points (the same bitterness as that of a solution containing 100 mg/L limonene dissolved in 1 v/v% alcoholic water)
Bitterness is very strongly tasted: 6 points (the same bitterness as that of a solution containing 30 mg/L limonene dissolved in 10 v/v% alcoholic water)
Bitterness is very strongly tasted to a point where the beverage is not suitable for drinking: 7 points (the same bitterness as that of a solution containing 50 mg/L limonene dissolved in 10 v/v% alcoholic water)

After the two panelists scored the samples based on the above sensory evaluation criteria, the scores given by the two panelists were averaged. The following Tables 2 to 7 show the results.

Table 2 shows the results of sensory evaluation (scores of the bitterness intensity) given by the panelist 1 for each sample having an alcohol content of 1 v/v%.

Table 3 shows the results of sensory evaluation (scores of the bitterness intensity) given by the panelist 2 for each sample having an alcohol content of 1 v/v%.

Table 4 shows averages of the results of sensory evaluation (scores of the bitterness intensity) given by the panelists for each sample having an alcohol content of 1 v/v%.

Table 5 shows the results of sensory evaluation (scores of the bitterness intensity) given by the panelist 1 for each sample having an alcohol content of 10 v/v%.

Table 6 shows the results of sensory evaluation (scores of the bitterness intensity) given by the panelist 2 for each sample having an alcohol content of 10 v/v%.

Table 7 shows averages of the results of sensory evaluation (scores of the bitterness intensity) given by the panelists for each sample having an alcohol content of 10 v/v%.

Although not shown in the following Tables 2 to 4, one sample having a limonene content of 0.5 mg/L and an ethyl glycoside content of 0 mg/L was compared to another sample having a limonene content of 0.5 mg/L and an ethyl glycoside content of 100 mg/L in order to find the lowest limonene concentration that allows ethyl glycoside to exert its effect on a sample having an alcohol content of 1 v/v%. As a result, the bitterness masking effect was confirmed at an ethyl glycoside concentration of 100 mg/L.

**[Table 2]**

| Bitterness intensity (panelist 1) | | Limonene (mg/L) | | | | |
|---|---|---|---|---|---|---|
| | | 0 | 10 | 30 | 50 | 100 |
| EG (mg/L) | 0 | 1 | 2 | 3 | 4 | 5 |
| | 5 | 1 | 1 | 2 | 3 | 4 |
| | 10 | 1 | 1 | 2 | 3 | 3 |
| | 25 | 1 | 1 | 2 | 2 | 3 |
| | 50 | 1 | 1 | 1 | 2 | 3 |
| | 100 | 1 | 1 | 1 | 1 | 3 |
| | 1000 | 1 | 1 | 1 | 1 | 2 |
| | 2500 | 1 | 1 | 1 | 1 | 2 |
| | 5000 | 1 | 1 | 1 | 1 | 2 |

**[Table 3]**

| Bitterness intensity (panelist 2) | | Limonene (mg/L) | | | | |
|---|---|---|---|---|---|---|
| | | 0 | 10 | 30 | 50 | 100 |
| EG (ppm) | 0 | 1 | 2 | 3 | 4 | 5 |
| | 5 | 1 | 1 | 2 | 3 | 4 |
| | 10 | 1 | 1 | 2 | 3 | 3 |
| | 25 | 1 | 1 | 2 | 3 | 3 |
| | 50 | 1 | 1 | 3 | 3 | 3 |
| | 100 | 1 | 1 | 2 | 3 | 3 |
| | 1000 | 1 | 1 | 1 | 2 | 2 |
| | 2500 | 1 | 1 | 1 | 2 | 2 |
| | 5000 | 1 | 1 | 1 | 2 | 2 |

**[Table 4]**

| Bitterness intensity (average) | | Limonene (mg/L) | | | | |
|---|---|---|---|---|---|---|
| | | 0 | 10 | 30 | 50 | 100 |
| EG (mg/L) | 0 | 1 | 2 | 3 | 4 | 5 |
| | 5 | 1 | 1 | 2 | 3 | 4 |
| | 10 | 1 | 1 | 2 | 3 | 3 |
| | 25 | 1 | 1 | 2 | 2.5 | 3 |
| | 50 | 1 | 1 | 2 | 2.5 | 3 |
| | 100 | 1 | 1 | 1.5 | 2 | 3 |
| | 1000 | 1 | 1 | 1 | 1.5 | 2 |
| | 2500 | 1 | 1 | 1 | 1.5 | 2 |
| | 5000 | 1 | 1 | 1 | 1.5 | 2 |

**[Table 5]**

| Bitterness intensity (panelist 1) | | Limonene (mg/L) | | | | | |
|---|---|---|---|---|---|---|---|
| | | 0 | 0.5 | 10 | 30 | 50 | 100 |
| EG (mg/L) | 0 | 4 | 4 | 5 | 6 | 7 | 7 |
| | 5 | 4 | 3 | 4 | 5 | 6 | 7 |
| | 10 | 4 | 3 | 4 | 5 | 6 | 7 |
| | 25 | 4 | 3 | 4 | 5 | 6 | 6 |
| | 50 | 4 | 3 | 4 | 5 | 6 | 6 |
| | 100 | 3 | 3 | 3 | 4 | 5 | 6 |
| | 1000 | 3 | 3 | 3 | 3 | 5 | 6 |
| | 2500 | 3 | 3 | 3 | 3 | 5 | 6 |
| | 5000 | 3 | 2 | 3 | 3 | 5 | 6 |

**[Table 6]**

| Bitterness intensity (panelist 2) | | Limonene (mg/L) | | | | | |
|---|---|---|---|---|---|---|---|
| | | 0 | 0.5 | 10 | 30 | 50 | 100 |
| EG (mg/L) | 0 | 4 | 4 | 5 | 6 | 7 | 7 |
| | 5 | 4 | 3 | 4 | 5 | 6 | 6 |
| | 10 | 4 | 3 | 4 | 5 | 5 | 6 |
| | 25 | 4 | 3 | 4 | 5 | 5 | 6 |
| | 50 | 4 | 3 | 4 | 4 | 5 | 6 |
| | 100 | 3 | 3 | 4 | 4 | 5 | 6 |
| | 1000 | 3 | 3 | 3 | 4 | 5 | 5 |
| | 2500 | 3 | 3 | 3 | 4 | 4 | 5 |
| | 5000 | 2 | 2 | 2 | 3 | 4 | 5 |

**[Table 7]**

| Bitterness intensity (average) | | Limonene (mg/L) | | | | | |
|---|---|---|---|---|---|---|---|
| | | 0 | 0.5 | 10 | 30 | 50 | 100 |
| EG (mg/L) | 0 | 4 | 4 | 5 | 6 | 7 | 7 |
| | 5 | 4 | 3 | 4 | 5 | 6 | 6.5 |
| | 10 | 4 | 3 | 4 | 5 | 5.5 | 6.5 |
| | 25 | 4 | 3 | 4 | 5 | 5.5 | 6 |
| | 50 | 4 | 3 | 4 | 4.5 | 5.5 | 6 |
| | 100 | 3 | 3 | 3.5 | 4 | 5 | 6 |
| | 1000 | 3 | 3 | 3 | 3.5 | 5 | 5.5 |
| | 2500 | 3 | 3 | 3 | 3.5 | 4.5 | 5.5 |
| | 5000 | 2.5 | 2 | 2.5 | 3 | 4.5 | 5.5 |

The results in Tables 2 and 3 as well as Tables 5 and 6 confirmed that the results of the sensory evaluation by the two panelists showed the same tendency.

The results in Tables 4 and 7 confirmed that the bitterness masking effect on the alcohol- and limonene-induced bitterness was produced when the limonene-containing alcoholic beverage contained 5 to 5000 mg/L ethyl glycoside.

### (Example 3) Bitterness masking effect of ethyl glycoside on carbonated alcoholic beverage

Carbonated water (Tennensui Sparkling (Suntory Holdings Limited)) was added to neutral alcohol to prepare a mixture having an alcohol content of 10 v/v%. Limonene (D-limonene available from NACALAI TESQUE, INC.) was dissolved in the mixture to obtain a limonene content as described in the following Tables 8 to 10. Further, ethyl glycoside (a-ethyl glycoside (FUJIFILM Wako Pure Chemical Corporation)) was dissolved therein to obtain an ethyl glycoside content as described in the following Tables 8 to 10. Thus, samples were prepared. A sensory test by spitting was performed by two expert panelists to evaluate (sensory evaluation) the bitterness masking effect on the obtained samples based on the following criteria. The sensory evaluation method by spitting is the same as described above for Reference Examples 1 to 3 and Examples 1 and 2. Working conditions for sensory evaluation of the bitterness masking effect are the same as those of the sensory evaluation in Examples 1 and 2 described above. Tables 8 to 10 show the results obtained.

Table 8 shows the results of sensory evaluation results (scores of the bitterness intensity) given by the panelist 1 for each sample (carbonic acid-containing sample having an alcohol content of 10 v/v%).

Table 9 shows the results of sensory evaluation results (scores of the bitterness intensity) given by the panelist 2 for each sample (carbonic acid-containing sample having an alcohol content of 10 v/v%).

Table 10 shows averages of the results of sensory evaluation results (scores of the bitterness intensity) given by the panelists for each sample (carbonic acid-containing sample having an alcohol content of 10 v/v%).

**[Table 8]**

| Bitterness intensity (panelist 1) | | Limonene (mg/L) | | | | | |
|---|---|---|---|---|---|---|---|
| | | 0 | 0.5 | 10 | 30 | 50 | 100 |
| EG (mg/L) | 0 | 3 | 4 | 5 | 6 | 7 | 7 |
| | 5 | 3 | 3 | 4 | 5 | 6 | 7 |
| | 10 | 3 | 3 | 3 | 5 | 6 | 6 |
| | 25 | 3 | 3 | 3 | 4 | 6 | 6 |
| | 50 | 3 | 3 | 3 | 4 | 6 | 6 |
| | 100 | 2 | 3 | 3 | 3 | 5 | 5 |
| | 1000 | 2 | 3 | 3 | 3 | 4 | 5 |

**[Table 9]**

| Bitterness intensity (panelist 2) | | Limonene (mg/L) | | | | | |
|---|---|---|---|---|---|---|---|
| | | 0 | 0.5 | 10 | 30 | 50 | 100 |
| EG (mg/L) | 0 | 3 | 4 | 5 | 6 | 7 | 7 |
| | 5 | 3 | 3 | 4 | 5 | 6 | 6 |
| | 10 | 3 | 3 | 3 | 5 | 5 | 5 |
| | 25 | 3 | 2 | 2 | 4 | 5 | 5 |
| | 50 | 3 | 2 | 2 | 3 | 4 | 4 |
| | 100 | 3 | 2 | 2 | 3 | 4 | 4 |
| | 1000 | 2 | 2 | 2 | 3 | 4 | 4 |

**[Table 10]**

| Bitterness intensity (average) | | Limonene (mg/L) | | | | | |
|---|---|---|---|---|---|---|---|
| | | 0 | 0.5 | 10 | 30 | 50 | 100 |
| EG (mg/L) | 0 | 3 | 4 | 5 | 6 | 7 | 7 |
| | 5 | 3 | 3 | 4 | 5 | 6 | 6.5 |
| | 10 | 3 | 3 | 3 | 5 | 5.5 | 5.5 |
| | 25 | 3 | 2.5 | 2.5 | 4 | 5.5 | 5.5 |
| | 50 | 3 | 2.5 | 2.5 | 3.5 | 5 | 5 |
| | 100 | 2.5 | 2.5 | 2.5 | 3 | 4.5 | 4.5 |
| | 1000 | 2 | 2.5 | 2.5 | 3 | 4 | 4.5 |

The results in Tables 8 and 9 confirmed that the results of the sensory evaluation by the two panelists showed the same tendency.

The results in Table 10 confirmed that the bitterness masking effect on the alcohol- and limonene-induced bitterness was produced when the limonene-containing alcoholic beverage contained 5 to 1000 mg/L ethyl glycoside.

In addition, the sensory evaluation for the case of the ethyl glycoside content of 5 to 1000 mg/L in Table 7 above was compared to the sensory evaluation for the case of the ethyl glycoside content of 5 to 1000 mg/L in Table 10 above. The results confirmed that the alcohol- and limonene-induced bitterness was more significantly masked by ethyl glycoside and the improvement effect was greater in the alcoholic beverages containing carbonic acid than in the alcoholic beverages not containing carbonic acid even when the alcohol content (10 v/v%), the limonene content, and the ethyl glycoside content were the same therebetween.

## Claims

1. An alcoholic beverage comprising:
0.5 to 50 mg/L limonene; and
5 to 5000 mg/L ethyl glycoside.

2. The alcoholic beverage according to claim 1,
wherein the alcoholic beverage has an alcohol content of 1 to 10 v/v%.

3. A method of producing an alcoholic beverage, the method comprising:
adjusting a limonene content to 0.5 to 50 mg/L; and
adjusting an ethyl glycoside content to 5 to 5000 mg/L.

4. The method of producing the alcoholic beverage according to claim 3,
wherein the alcoholic beverage has an alcohol content of 1 to 10 v/v%.

5. A method of reducing limonene- and alcohol-induced bitterness of an alcoholic beverage having a limonene content of 0.5 to 50 mg/L, the method comprising:
adjusting an ethyl glycoside content of the alcoholic beverage to 5 to 5000 mg/L.

6. The method of reducing bitterness of an alcoholic beverage according to claim 5,
wherein the alcoholic beverage has an alcohol content of 1 to 10 v/v%.

7. Use of ethyl glycoside for reducing limonene- and alcohol-induced bitterness of an alcoholic beverage having a limonene content of 0.5 to 50 mg/L,
wherein ethyl glycoside is added such that the alcoholic beverage has an ethyl glycoside content of 5 to 5000 mg/L.

8. The use according to claim 7,
wherein the alcoholic beverage has an alcohol content of 1 to 10 v/v%.
